# EUROPEAN PATENT SPECIFICATION

(11) **EP 2 070 978 B1**
(45) Date of publication and mention of the grant of the patent: **25.07.2012**
(21) Application number: 08253990.9
(22) Date of filing: 12.12.2008
(51) Int. Cl.: C08K 7/00, C08K 7/24, H01B 1/24, C08K 3/04, C08J 5/00

(54) **Carbon nanotube-based composite material and method for fabricating same**
Verbundstoffmaterial auf Kohlenstoffnanoröhrchenbasis und dessen Herstellungsverfahren
Matériau composite à base de nanotubes de carbone et son procédé de fabrication

(30) Priority: 14.12.2007 CN 200710125109; 21.12.2007 CN 200710125411; 11.01.2008 CN 200810065181
(43) Date of publication of application: 17.06.2009
(73) Proprietor: Tsing Hua University, Haidian District Beijing City (CN); Hon Hai Precision Industry Co., Ltd., Tu-cheng City, Taipei Hsien (TW)
(72) Inventor: Wang, Jia-Ping, Beijing City (CN); Cheng, Qun-Feng, Beijing City (CN); Jiang, Kai-Li, Beijing City (CN); Fan, Shou-Shan, Beijing City (CN)
(74) Representative: Gray, John James

(56) References cited:
- EP-A1- 2 037 516
- EP-A2- 2 061 077
- WO-A1-00/73204
- MEI ZHANG ET AL: "Strong, Transparent, Multifunctional, Carbon Nanotube Sheets" SCIENCE, AMERICAN ASSOCIATION FOR THE ADVANCEMENT OF SCIENCE, WASHINGTON, DC; US LNKD- DOI:10.1126/SCIENCE.1115311, vol. 309, 19 August 2005 (2005-08-19), pages 1215-1219, XP002520232 ISSN: 0036-8075

## Description

The present invention relates to composite materials and methods for fabricating the same and, particularly, to composite material having carbon nanotube and a method for fabricating the same.

Due to potentially useful heat and electrical conduction and mechanical properties, carbon nanotubes (CNTs) have received a great deal of interest since the early 1990s. And it is becoming increasingly popular for CNTs to be used as filler in composite materials.

Presently, it is common for carbon nanotubes to be surface-modified before being embedded in polymers to form composite materials. A common method for fabricating a carbon nanotube-based composite material includes: providing multi-walled carbon nanotubes and concentrated nitric acid, and placing the carbon nanotubes into the concentrated nitric acid to form a mixture; agitating the mixture for 20 hours at 200°C; washing the carbon nanotubes with distilled water, and drying the carbon nanotubes in a vacuum for 10 hours at 90°C; placing the carbon nanotubes into oxalyl chloride to form a mixture, and agitating the mixture for 10 hours at 90°C; vaporizing the excess oxalyl chloride, with the result being chlorinated carbon nanotubes; dripping diaminoethane into the chlorinated carbon nanotubes in an ice bath to form a first mixture, stirring the first mixture slowly, and drying the first mixture in vacuum for 10 hours at 100°C to form aminated carbon nanotubes; placing the aminated carbon nanotubes into ethanol to form a second mixture and ultrasonically agitating the second mixture for 15 minutes; adding epoxide resin into the second mixture and rapidly stirring for 20 minutes; heating the second mixture to 60°C to vaporize the ethanol, and adding a curing agent into the second mixture; and finally filling the second mixture into a die and heating at 80°C for 2 hours, then heating at 150°C for 2 hours, such that the second mixture is cured to form the carbon nanotube-based composite material.

The described method of agitating and stirring to disperse the carbon nanotubes in the polymer, however, presents disadvantages. The carbon nanotubes are prone to adhere to each other in the polymer, the surface modification results in defects on the structure of the carbon nanotubes which affect the overall properties of the carbon nanotubes, and the carbon nanotubes in the composite material are disorganized (i.e., not arranged in any particular axis). Furthermore, agents and organic solvents added during the manufacturing process are hard to eliminate, resulting in the achieved carbon nanotube-based composite material being impure. Hence, the fabricating method involving surface modification is complicated and has a relatively high cost.

'Strong, transparent, multifunctional, carbon nanotube sheets' published by Mei Zhang et al. at Science vol. 309 pages 1215-1219 discloses that carbon nanotube sheets can be adhered together.

European patent application 2037516 A1, not published at the filing date of the present application, discloses a lithium battery and a method for fabricating an anode, in which the carbon nanotube film structure is coated with a polymer.

WO00/73204 A1 describes a substrate-supported aligned carbon nanotube film and a method of peeling off the carbon nanotube film from the supported substrate, in which to peel off the aligned carbon nanotube layer a polymer film is adhered on the top surface of an aligned carbon nanotube layer.

European patent application 2061077 A2, not published at the filing date of the present application, teaches a sheet structure and method of manufacturing the same, in which the sheet structure includes a plurality of linear structure bundles each of which comprises a plurality of linear structures of carbon atoms arranged, spaced from each other at a first gap and which are arranged at a second gap which a larger than the first gap; and a filling layer filled in the first gap and the second gap and supporting the plurality of linear structure bundles.

What is needed is a carbon nanotube-based composite material and a method for fabricating the same, in which the described limitations are eliminated or at least alleviated.

The invention in one embodiment, a carbon nanotube-based composite material comprises a polymer matrix and a carbon nanotube film structure disposed in the polymer matrix, the carbon nanotube film structure comprising a plurality of carbon nanotubes, wherein the carbon nanotube film structure is disposed in a central layer region between upper and lower layer portions of the polymer matrix, a plurality of interspaces is defined between the carbon nanotubes of the carbon nanotube film structure, and the polymer matrix fills the interspaces.

In another embodiment, the invention provides a method for fabricating the carbon nanotube-based composite material comprises: forming a carbon nanotube film structure and providing a polymer material of a polymer matrix; filling the carbon nanotube film structure with the polymer material to form the carbon nanotube-based composite material comprising the carbon nanotube film structure and the polymer material, wherein the carbon nanotube film structure is disposed in a central layer region between upper and lower layer portions of the polymer matrix, a plurality of interspaces is defined between the carbon nanotubes of the carbon nanotube film structure, and the polymer matrix fills the interspaces.

Other novel features and advantages of the present carbon nanotube-based composite material and method for fabricating the same will become more apparent from the following detailed description of exemplary embodiments when taken in conjunction with the accompanying drawings.

Many aspects of the present carbon nanotube-based composite material and method for fabricating the same can be better understood with reference to the following drawings. The components in the drawings are not necessarily drawn to scale, the emphasis instead being placed upon clearly illustrating the principles of the present carbon nanotube-based composite material and method for fabricating the same.

FIG. 1 is a cross-sectional view of a carbon nanotube-based composite material in accordance with an exemplary embodiment.

FIG. 2 is similar to FIG. 1, but showing more detail.

FIG. 3 is an isometric, exploded view of a carbon nanotube film structure of the carbon nanotube-based composite material of FIG 2.

FIG. 4 is a flowchart of an exemplary method for fabricating the carbon nanotube-based composite material of FIG. 1.

FIG. 5 is a cross-sectional view of a preform employed in the method for making the carbon nanotube-based composite material of FIG. 1.

FIG. 6 is a cross-sectional view of a system for fabricating the carbon nanotube-based composite material of FIG. 1.

FIG. 7 is a schematic view of a system used for pre-combining the preform employed in a method for making of FIG. 1.

FIG. 8 is a cross-sectional view of a system for fabricating the carbon nanotube-based composite material of FIG. 1.

FIG. 9 is a schematic view a system used for fabricating the carbon nanotube-based composite material of FIG. 1.

Corresponding reference characters indicate corresponding parts throughout the several views. The exemplifications set out herein illustrate at least one embodiment of the present carbon nanotube-based composite material and method for fabricating the same, in at least one form, and such exemplifications are not to be construed as limiting the scope of the invention in any manner.

Reference will now be made to the drawings to describe, in detail, embodiments of the present carbon nanotube-based composite material and method for fabricating the same.

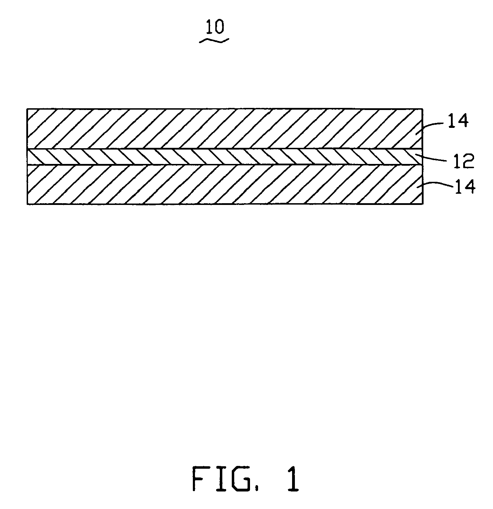

Referring to FIG. 1, a carbon nanotube-based composite material 10 includes a polymer matrix 14 and a plurality of carbon nanotubes dispersed therein.

The carbon nanotubes form a carbon nanotube film structure 12 in the polymer matrix 14. The carbon nanotube film structure 12 is free standing. Free standing means that the carbon nanotubes combine, connect or join with each other by Van Der Waals attractive force, to form the carbon nanotube film structure 12. The carbon nanotube film structure 12 is supported by itself and does not need a substrate to lay on and support. When an operator holds at least a point of the carbon nanotube film structure 12, the entire carbon nanotube film structure 12 can be lift without being destroyed.

The polymer matrix 14 includes upper and lower layer portions, and can be made of thermosetting resin or thermoplastic resin. The material of the thermosetting resin can be phenolic, epoxy, bismaleimide, polybenzoxazine, cyanate ester, polyimide, unsaturated polyamide ester, or any combinations thereof. The material of the thermoplastic resin can be polyethylene, polyvinyl chloride, polytetrafluoroethylene, polypropylene, polystyrene, polymethyl methacrylate acrylic, polyethylene terephthalate, polycarbonate, polyamide, polybutylene terephthalate, polyether ketone, polyether sulfone, ether sulfone, thermoplastic polyimide, polyetherimide, polyphenylene sulfide, polyvinyl acetate, paraphenylene benzobisoxazole, or any combinations thereof.

The carbon nanotube structure 12 can include one carbon nanotube film, or a plurality of coplanar or stacked carbon nanotube films. The carbon nanotubes in each carbon nanotube film are aligned parallel to the same axis. More specifically, each carbon nanotube film includes a plurality of successive and oriented carbon nanotubes joined end-to-end by Van Der Waals attractive force. A length and a width of the carbon nanotube film can be arbitrarily set as desired. A thickness of the carbon nanotube film is 0.5 nanometers (nm) to 100 microns (µm). The carbon nanotubes in the carbon nanotube film can be single-walled, double-walled, or multi-walled. Diameters of the single-walled carbon nanotubes can be from about 0.5 nm to about 50 nm, diameters of the double-walled carbon nanotubes can be from about 1 nm to about 50 nm, and diameters of the multi-walled carbon nanotubes can be from about 1.5 nm to about 50 nm.

When the carbon nanotube film structure 12 includes two or more carbon nanotube films stacked one on another, the adjacent carbon nanotube films are combined by Van de Waals attractive force, thereby providing the carbon nanotube film structure 12 with stability. An angle α between the alignment axes of the carbon nanotubes in each two adjacent carbon nanotube films is 0≦α≦90°.

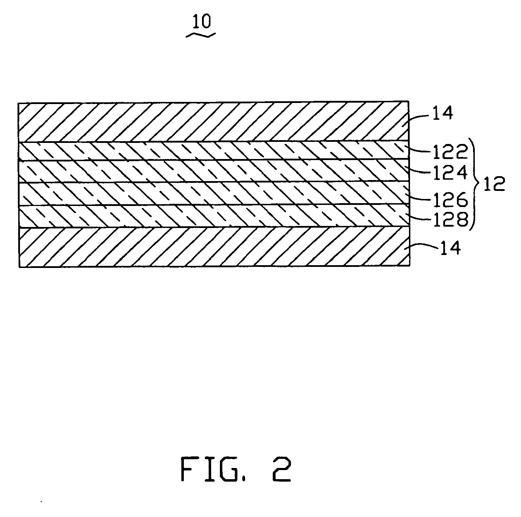

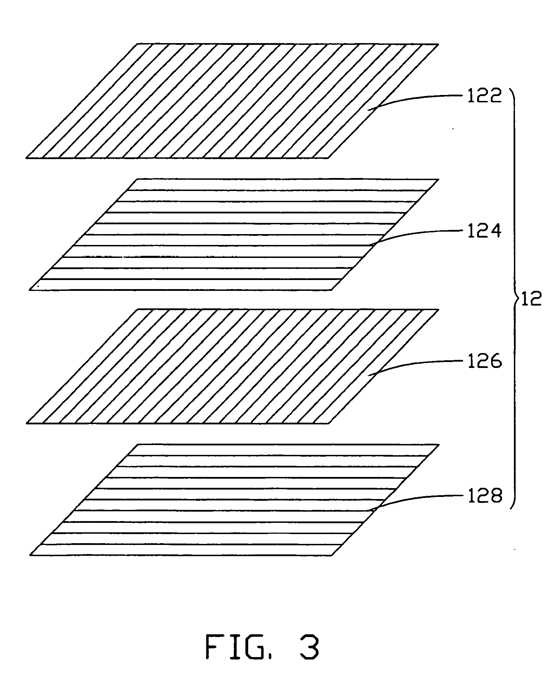

Referring to FIGS. 2 and 3, the carbon nanotube structure 12 includes a first carbon nanotube film 122, a second carbon nanotube film 124, a third carbon nanotube film 126, and a fourth carbon nanotube film 128. The fourth, third, second, and first carbon nanotube films 128, 126, 124, 122 are in series superposed from bottom to top. An angle α between the alignment axes of the carbon nanotubes in each two adjacent carbon nanotube films is 90°. The thickness of the carbon nanotube film structure 12 is from about 0.04 µm to about 400 µm.

In the carbon nanotube-based composite material 10, the carbon nanotube film structure 12 is positioned in a central layer region between the upper and lower layer portions of the polymer matrix 14, with the carbon nanotubes uniformly disposed in the polymer matrix 14. A plurality of interspaces is defined between the carbon nanotubes, and the polymer matrix 14 fills the interspaces. That is, the carbon nanotube film structure 12 is soaked by and combined with the polymer matrix 14 to form the carbon nanotube-based composite material 10.

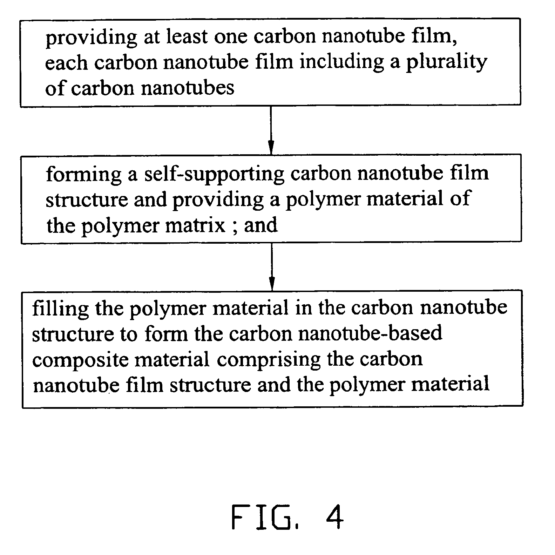

Referring to FIG. 4, an exemplary method for fabricating the carbon nanotube-based composite material 10 includes: (a) providing at least one carbon nanotube film, each carbon nanotube film including a plurality of carbon nanotubes; (b) forming a self-supporting carbon nanotube film structure 12 and providing a polymer material of the polymer matrix 14; and (c) filling the polymer material in the carbon nanotube structure to form the carbon nanotube-based composite material 10 comprising the carbon nanotube film structure 12 and the polymer material.

In step (a), the carbon nanotube film can be formed by: (a1) providing an array of carbon nanotubes, specifically, a super-aligned array of carbon nanotubes; and (a2) pulling out a carbon nanotube film from the array of carbon nanotubes via a pulling tool allowing multiple carbon nanotubes to be gripped and pulled simultaneously.

In step (a1), the super-aligned array of carbon nanotubes can be formed by: (a11) providing a substantially flat and smooth substrate; (a12) forming a catalyst layer on the substrate; (a13) annealing the substrate with the catalyst layer in air at a temperature from about 700°C∼900°C for about 30 to 90 minutes; (a14) heating the substrate with the catalyst layer to a temperature from about 500°C∼740°C in a furnace with a protective gas therein; and (a15) supplying a carbon source gas to the furnace for about 5 to 30 minutes and growing the super-aligned array of carbon nanotubes on the substrate.

In step (a11), the substrate can be a P-type silicon wafer, an N-type silicon wafer, or a silicon wafer with a film of silicon dioxide thereon. Here, a 4-inch P-type silicon wafer is used as the substrate.

In step (a12), the catalyst can be iron (Fe), cobalt (Co), nickel (Ni), or any alloy thereof.

In step (a14), the protective gas can be at least one of the following: nitrogen (N₂), ammonia (NH₃), and a noble gas. In step (a15), the carbon source gas can be a hydrocarbon gas, such as ethylene (C₂H₄), methane (CH₄), acetylene (C₂H₂), ethane (C₂H₆), or any combination thereof.

The super-aligned array of carbon nanotubes can be about 200µm to 400 µm in height, and include a plurality of parallel carbon nanotubes approximately perpendicular to the substrate. The carbon nanotubes in the array can be single-walled carbon nanotubes, double-walled carbon nanotubes, or multi-walled carbon nanotubes. Diameters of the single-walled carbon nanotubes are from about 0.5 nm to about 10 nm, diameters of the double-walled carbon nanotubes are from about 1 nm to about 50 nm, and diameters of the multi-walled carbon nanotubes are 1.5 nm to 50 nm.

The super-aligned array of carbon nanotubes formed under such conditions is essentially free of impurities such as carbonaceous or residual catalyst particles. The carbon nanotubes in the super-aligned array are closely packed together by Van Der Waals attractive force.

In step (a2), the carbon nanotube film can be formed by: (a21) selecting one or more carbon nanotubes having a predetermined width from the super-aligned array of carbon nanotubes; and (a22) pulling the carbon nanotubes at an even/uniform speed to form nanotube segments and achieve a uniform carbon nanotube film.

In step (a21), the carbon nanotubes having a predetermined width can be selected by using an adhesive tape as the tool to contact the super-aligned array of carbon nanotubes. Each carbon nanotube segment includes a plurality of parallel carbon nanotubes. In step (a22), the pulling direction is substantially perpendicular to the growing direction of the super-aligned array of carbon nanotubes.

Specifically, during the pulling process, as the initial carbon nanotube segment is drawn out, other carbon nanotube segments are also drawn out end-to-end due to the Van Der Waals attractive force between ends of adjacent segments. This process of drawing ensures that a continuous, uniform carbon nanotube film having a certain width can be formed. The carbon nanotube film includes a plurality of carbon nanotubes joined end-to-end. The carbon nanotubes in the carbon nanotube film are all substantially parallel to the pulling/drawing direction, and the carbon nanotube film produced in such manner can be selectively formed to have a predetermined width. The carbon nanotube film formed by the pulling/drawing method has superior uniformity of thickness and conductivity over a typical carbon nanotube film in which the carbon nanotubes are disorganized and not arranged along any particular axis. Furthermore, the pulling/drawing method is simple and fast, thereby making it suitable for industrial applications.

The maximum width possible for the carbon nanotube film depends on the size of the carbon nanotube array. The length of the carbon nanotube film can be arbitrarily set, as desired. When the substrate is a 4-inch P-type silicon wafer, the width of the carbon nanotube film can be from about 0.01 centimeters (cm) to about 10 cm, and the thickness of the carbon nanotube film is from about 0.5 nm to about 100 µm.

There are two methods to perform the step (b).

The step (b) is performed in the first method by the steps of: (b1) provding a polymer film16 and at least one carbon nanotube film; and (b2) adhering the at least one carbon nanotube film to the surface of the polymer film to form a preform 40.

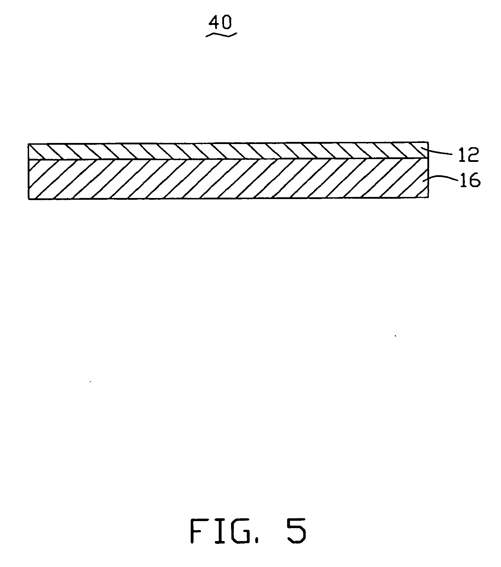

Referring to FIG. 5, the perform 40 includes the polymer film 16 and the carbon nanotube film structure 12. The carbon nanotube film structure 12 is formed by adhering the at least one carbon nanotube film to the surface of the polymer film 16. The polymer film 16 is made of the same material as the polymer matrix 14.

In step (b1), the material of the polymer matrix 14 can be made into the polymer film 16 by: (b11) providing a liquid allylphenol, and filling the liquid allylphenol into a container; (b 12) heating and stirring the liquid allylphenol in the container at about 90°C∼180°C for several minutes; (b13) adding bismaleimide powder into the liquid allylphenol at about 110°C∼160°C to form a mixture, and letting the mixture rest for several minutes at the same temperature; (b14) evacuating air from the container for several minutes to create a vacuum and remove gas within the liquid, thereby achieving a pure liquid; and (b15) filling the liquid into a mold and cooling to room temperature to achieve the polymer film 16.

In step (b13), a weight ratio of the bismaleimide powder to the liquid allylphenol is from about 60:5 to about 60:70. In step (b15), the thickness and shape of the polymer film 16 are defined by the mold.

It will be apparent to those skilled in the art that the polymer film 16 can also be achieved by other methods known in the art, such as, spraying, coating, or flowing.

In step (b2), it is noted that because the carbon nanotubes in the super-aligned carbon nanotube array have a high purity and a high specific surface area, the carbon nanotube film is adherent in nature. As a result, at least one carbon nanotube film can be directly adhered to the surface of the polymer film 16 and thus forming one carbon nanotube film structure 12 on the polymer film 16, thereby creating one preform 40. For example, a plurality of carbon nanotube films can be adhered on the surface of the polymer film 16 side-by-side and coplanar with each other, to thereby form the carbon nanotube film structure 12. In another example, two or more such carbon nanotube films can be stacked each other on the surface of polymer film 16 to form a carbon nanotube film structure 12 with stacked carbon nanotube films. The angle α between the alignment axes of the carbon nanotubes in each two adjacent carbon nanotube films is 0≦α≦90°. Here, the angle α is about 90°. In each carbon nanotube film, a space is defined between every two adjacent carbon nanotubes. The carbon nanotubes in each two adjacent carbon nanotube films are crossed each other, thereby providing the carbon nanotube film structure 12 with a microporous structure. A diameter of each micropore in the microporous structure is from about 1 nm to about 0.5 µm.

In another embodiment, after disposing the carbon nanotube film structure 12 on the polymer film 16, another discrete polymer film 16 can be further provided and covered on the carbon nanotube film structure 12.

It is to be understood that when the size of the as-formed carbon nanotube film exceeds that of the surface of the polymer film 16, the excess carbon nanotube film can be removed. The carbon nanotube film can be sized and shaped as needed by laser cutting in air. The cutting step can be performed before or after the adhering step. In the following description, unless the context indicates otherwise, it will be assumed that the carbon nanotube film is adhered on the surface of the polymer film 16 prior to the cutting step.

It will be apparent to those having ordinary skill in the art that the carbon nanotube film structure 12 can be firstly formed by a tool (e.g. a frame). The formed carbon nanotube film structure 12 can then be adhered on the surface of the polymer film 16 to achieve the preform 40. Alternatively, the carbon nanotube film structure 12 can be adheringly sandwiched between two layers of the polymer film 16 (i.e., another polymer film 16 can be disposed on the surface of the carbon nanotube film structure 12 to form the preform 40).

Each carbon nanotube film can be treated with an organic solvent. Specifically, the organic solvent can be dropped from a dropper onto the carbon nanotube film to soak the entire surface thereof. The organic solvent is volatilizable and can be ethanol, methanol, acetone, dichloroethane, chloroform, or any appropriate mixture thereof. Here, the organic solvent is ethanol. After being soaked in the organic solvent, the carbon nanotube segments in the nanotube film can, at least partially, shrink and firmly adhere to the surface of the polymer film 16 due, in part at least, to the surface tension created by the organic solvent. Due to the decrease of the specific surface area via bundling, the coefficient of friction of the carbon nanotube film is reduced, while the high mechanical strength and toughness is maintained. It is to be understood that in alternative embodiments, each carbon nanotube film or the carbon nanotube film structure 12 can be treated with an organic solvent before being adhered on the polymer film 16. In these situations, each carbon nanotube film or the carbon nanotube film structure 12 can be adhered on a frame and soaked in an organic solvent bath. Then, the treated carbon nanotube film or carbon nanotube film structure 12 can be disposed on the polymer film 16.

In the second method of step (b), the carbon nanotube film structure 12 is formed by stacking at least two carbon nanotube films by a tool (e.g. a frame). Each carbon nanotube film includes a plurality of carbon nanotubes arranged along the drawing direction. At least two carbon nanotube films are stacked one on top of another. Each carbon nanotube film comprises a plurality of carbon nanotubes oriented along one direction, and an angle between the alignment directions of the carbon nanotubes in any two adjacent carbon nanotube films is from about 0° to about 90°. The angle is determined by the difference in the two drawing directions of the adjacent carbon nanotube films.

In the second method of step (b), the polymer material is a liquid-state polymer material 24. The liquid-state polymer material 24 is a liquid-state thermosetting polymer. The liquid-state thermosetting polymer can be fabricated by the following substeps: (b11') providing a polymer in a container, and heating and agitating the polymer at a temperature of less than 300°C; (b12') adding at least one additive (see below) into the polymer; and (b13') heating and uniformly agitating the polymer with the at least one additive at a temperature of less than 300°C, thereby obtaining the liquid-state thermosetting polymer.

The method of fabricating the liquid-state thermosetting polymer includes: (b 11') providing a mixture of epoxy resin of glycidyl ether and epoxy resin of glycidyl fat disposed in a container, heating the mixture to a temperature from about 30°C to about 60°C, and agitating the mixture for 10 minutes; (b12') adding aliphatic amine and diglycidyl ether to the mixture; and (b13') heating the mixture to a temperature from about 30°C to about 60°C, and obtaining a liquid-state thermosetting polymer comprising epoxy resin.

A viscosity of the liquid-state thermosetting polymer is less than 5 pascal-seconds (Pa.s), which can be kept at room temperature for at least 30 minutes. The liquid-state thermosetting polymer includes polymer and at least one additive. The at least one additive is selected from a group comprising of solidifying agent, modifying agent, diluting agent, filler, and any combination thereof. A mass ratio of the polymer to the additive is from about 7:3 to about 19:1.

The liquid-state thermosetting polymer is selected from a group comprising of phenolic resin, epoxy resin, bismaleimide resin, triazine resin, polyimide, and polymethyl methacrylate. The solidifying agents are selected from a group comprising of aliphatic amine, aliphatic cyclic amine, aromatic amine, polyamide, acid anhydride, tertiary amine, and any combination thereof, and are ultimately configured for accelerating the process of solidifying the liquid-state thermosetting polymer. The modifying agents are selected from a group comprising of polysulphide rubber, polyamide resin, acrylonitrile rubber, and any combination thereof, and are ultimately configured for improving the property of the liquid-state thermosetting polymer. The diluting agents are selected from a group comprising of diglycidyl ether, polyglycidyl ether, butyl epoxy propyl ether, allylphenol, and any combination thereof. The fillers are selected from a group comprising of asbestos fiber, glass fiber, quartz powder, aluminum oxide, and any combination thereof, and are ultimately configured for improving the heat-dissipation of the liquid-state thermosetting polymer.

There are three methods to perform the step (c).

A first method for performing the step (c) includes: heating the preform 40 to combine the carbon nanotube film(s) with the polymer film 16 and produce the carbon nanotube-based composite material 10.

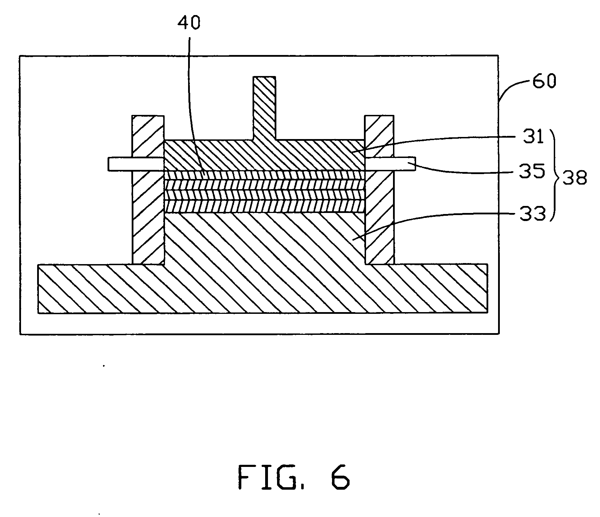

Referring to FIG. 6, the first method for performing the step (c) typically includes: (c1) providing a mold 38 having an upper board 31 and a lower board 33, and disposing the preform 40 between the upper and lower boards 31, 33; (c2) heating the mold 38 to melt the polymer film 16, thereby filling the interspaces between the carbon nanotubes of the carbon nanotube structure 12 with the polymer matrix 14; and (c3) solidifying the polymer matrix 14 and removing it from the mold 38 to achieve the carbon nanotube-based composite material 10.

In step (c1), the mold 38 includes the upper board 31, the lower board 33, a sidewall. The upper board 31 is disposed over the lower board 33. The upper board 31 and the lower board 33 are surrounded by the sidewall. The sidewall defines a through hole 35. A releasing agent is applied inside the mold 38 for remolding the carbon nanotube-based composite material 10 formed therein. It is noted that in alternative embodiments, a plurality of preforms 40 can be stacked and disposed between the upper board 31 and the lower board 33 of the mold 38 simultaneously. In FIG. 6, two stacked preforms 40 in the mold 38 are shown.

Step (c2) can include: (c21) disposing the mold 38 in a heating device 60 (e.g. a hot-pressing machine); (c22) applying a pressure less than 100 mega-pascals (Mpa) on the preform 40 through the upper board 31 and the lower board 33 at an elevated temperature (e.g. about 100°C∼ 150°C); (c23) evacuating the air in the heating device 60 until the pressure of the air therein is below -0.01 MPa, and maintaining the pressure on the preform 40 and the temperature for a period of time (e.g., about 1 to 5 hours); and (c24) relieving the pressure on the preform 40.

The polymer film 16 is in a liquid state at 100°C∼150°C. Through hot pressing, the polymer film 16 come into a liquid state and infiltrates the interspaces between the carbon nanotubes and forms a carbon nanotube-based composite material 10. Excess polymer matrix 14 can be drained through the through hole 35. The air in the interspaces between the carbon nanotubes can be removed in step (c23) by a vacuum pump (not shown) connected to the heating device 60.

In step (c3), the preform 40 is cooled to room temperature, thereby solidifying the polymer matrix 14 to achieve the carbon nanotube-based composite material 10.

When the polymer matrix 14 is thermosetting resin, an additional heating of the preform 40 is further provided before the cooling in step (c3). To avoid explosive polymerization of the polymer matrix 14, the temperature must be slowly elevated. The heating step includes three temperature periods: 150°C∼180°C for 2∼4 hours, 180°C∼200°C for 1∼5 hours, and 200°C∼230°C for 2∼20 hours.

When the polymer matrix 14 is thermoplastic resin, the above-described additional heating of the preform 40 is not required.

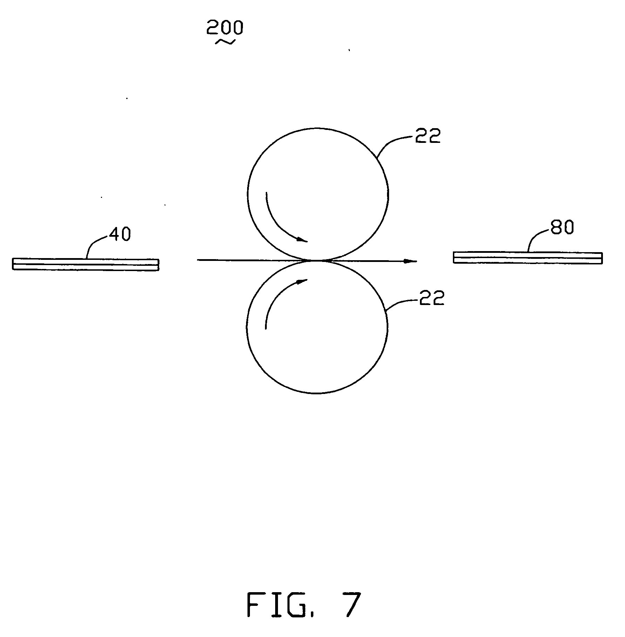

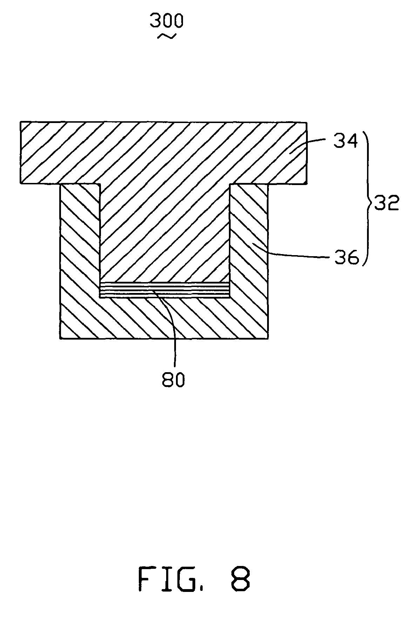

Referring to FIG. 7 and FIG. 8, a second method for performing the step (c) includes: (c1') pre-combining at least one preform 40 to obtain at least one treated preform 80; and (c2') heating and pressing the at least one treated preform 80 to achieve the carbon nanotube-based composite material 10.

Referring to FIG. 7, the step (c1') of pre-combining the preform 40 to obtain the treated preform 80 can be carried out via a hot-pressing apparatus selected from the group consisting of double roll device 200, flat hot-pressing shaper, hot press, flat vulcanizer, and oven. The purpose of pre-combining is to evacuate the air in the preform 40 and soften the polymer film 16. The soft polymer film 16 could connect with the carbon nanotubes in the carbon nanotube film structure 12 closely.

Step (c1') is carried out via a double roll device 200. The double roll device 200 includes two metal rollers 22 and a heating device. The preform 40 is passed through the hot double roll device 200 slowly with a velocity from about 1 millimeter per minute to about 10 meters per minute. The temperature of the double roll device 200 is higher than the softening temperature of the polymer film 16 so as to soften the polymer film 16 to connect with the carbon nanotubes in the carbon nanotube film structure 12 closely. Therefore, the temperature of the double roll device 200 varies with the softening temperature of the polymer film 16. In order to evacuate the air in the preform 40 entirely, the step (c1') can be repeated many times. It is to be understood that the process of pre-combining can also be carried out in a vacuum so as to evacuate the air in the preform 40 more effectively.

In the step (c2'), the process of heating and pressing the at least one treated preform 80 is carried out via a hot-pressing apparatus. The polymer film 16 becomes molten and infiltrates micropores of the carbon nanotube film structure 12.

The step (c2') includes following substeps of: (c2'1) placing the at least one treated preform 80 into a hot-pressing apparatus; (c2'2) heating and pressing the at least one treated preform 80 for a pre-determined period of time; and (c2'3) cooling down and remolding the at least one treated preform 80 to achieve the carbon nanotube-based composite material 10.

In step (c2'1), the hot-pressing apparatus can be selected from the group consisting of hot press, flat hot-pressing shaper, flat vulcanizer, and oven. Referring to FIG. 8, here, the hot-pressing apparatus is a hot press 300. The hot press 300 includes a pressing device, a heating device and a mold 32. The mold 32 includes an upper male portion 34 and a lower female portion 36. A step of coating releasing agent on an inner surface of the mold 32 can be provided before placing the at least one treated preform 80 therein. The releasing agent will facilitate the process of remolding in following step. The materials of the releasing agent various with the materials of the polymer film. The releasing agent can be selected from the group consisting of silicon releasing agent, wax releasing agent, and siloxane releasing agent.

The step (c2'2) could include the following substeps of: (c2'21) heating the at least one treated preform 80 up to a temperature above the melting point of the polymer film 16; and (c2'22) pressing the treated preform 80 for a period of time long enough to melt the polymer film 16 entirely and allow infiltration of the polymer materials into the micropores of the carbon nanotube film structure 12. These steps can be performed individually as well as simultaneously.

The step (c2'2) include the following substeps of: (c2'21') pressing the at least one treated preform 80; and (c2'22') heating the at least one treated preform 80 up to the melting point of the polymer film 16 for a period of time long enough to melt the polymer film 16 entirely allowing infiltration of the polymer materials into the micropores of the carbon nanotube film structure 12.

The step (c2'2) can be carried out by heating the at least one treated preform 80 up to the melting point of the polymer film and pressing the at least one treated preform 80 at the same time until the polymer film 16 melts entirely and the polymer materials infiltrate into the micropores of the carbon nanotube film structure 12.

In the step (c2'2), the heating temperature varies with the melting temperature of the polymer film 16. The heating temperature is above the melting temperature of the polymer film 16 so as to melt the polymer film 16 entirely and infiltrate the polymer materials into the micropores of the carbon nanotube film structure 12. The pressure is lower than 100 Mpa. The period of time for keeping the pressure on the at least one treated preform 80 is shorter than 2 hours. It is to be understood that several stacked treated preforms 80 can be heated and pressed together.

In the step (c2'3), the treated preform 80 can be actively or passively cooled. Here, the remolding is carried out at a temperature below 60 °C.

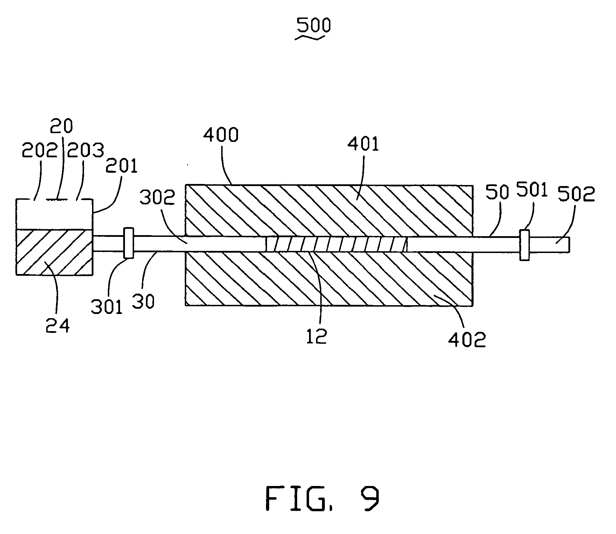

Referring to FIG. 9, a third method for performing the step (c) includes: (c1") immersing the carbon nanotube film structure 12 in the liquid-state polymer material 24; and (c2") solidifying the liquid-state polymer material 24 to achieve a carbon nanotube-based composite material 10.

In step (c1"), an apparatus 500 is provided to combine the carbon nanotube film structure 12 and the liquid-state polymer material 24. The apparatus 500 includes a material supply device 20, a material input device 30, a die 400, and a material output device 50. The material supply device 20 includes a container 201 with a first inlet 202 and a second inlet 203. The first inlet 202 is configured for removing air out from and thereby creates a vacuum in the container 201. The second inlet 203 is configured for applying pressure upon the liquid-state polymer material 24. The material input device 30 includes a first valve 301 and a third inlet 302. The first valve 301 is configured for controlling an input of the liquid-state polymer material 24. The third inlet 302 is configured for injecting the liquid-state polymer material 24 into the die 400. The die 400 includes an upper die 401 and a lower die 402. A stripping agent is coated on the upper die 401 and lower die 402 respectively. The material output device 50 includes a second valve 501 and an outlet 502. The second valve 501 is configured for controlling an output of the liquid-state polymer material 24. The outlet 502 is configured for ejecting the liquid-state polymer material 24 out of the apparatus 500.

The method of immersing the carbon nanotube film structure 12 in the liquid-state polymer material 24 using the apparatus 500 includes the following steps: (c1"1) disposing the carbon nanotube structure 12 in the die 400; (c1"2) injecting the liquid-state polymer material 24 into the container 201, removing air from the container 201 to create a vacuum therein, and applying injection pressure upon the liquid-state polymer material 24; and (c1"3) injecting the liquid-state polymer material 24 into the die 400, and thereby immersing the carbon nanotube film structure 12 in the liquid-state polymer material 24.

In step (c1"1), the carbon nanotube film structure 12 is disposed in the die 400 by the following substeps: (c 1"11) coating a stripping agent on the upper die 401 and lower die 402 respectively; (c1"12) disposing the carbon nanotube film structure 12 on the lower die 402; and (c1"13) disposing the upper die 401 on the lower die 402, and hermetically sealing (and airproofing) the die 400 with a hermetic gasket or seal.

In step (c1"2), the liquid-state polymer material 24 is disposed in the container 201 by the following substeps: (c1"21) closing the first valve 301 of the material input device 30 and the second valve 501 of the material output device 50; (c1"22) disposing the liquid-state polymer material 24 in the container 201 of the material supply device 20; (c1"23) removing air from the container 201 via the first inlet 202 of the material supply device 20 to create a vacuum in the container 201, wherein a pressure of the container 201 is below 9×10⁻² mega-pascals (Mpa), and this pressure of the container 201 is maintained for at least 10 minutes; and (c2"24) applying an injection pressure on the liquid-state polymer material 24 via the second inlet 203 of the material supply device 20, wherein the injection pressure is from about 0.001 Mpa to about 10 Mpa.

In step (c1"3), the liquid-state polymer material 24 is injected into the die 400 by the following substeps: (c1"31) opening the first valve 301 of the material input device 30 and the second valve 501 of the material output device 50; and (c1"32) under the injection pressure, the liquid-state polymer material 24 in the container 201 entering the die 400 via the material supply device 30, and immersing the carbon nanotube film structure 12 for at least 10 minutes.

The viscosity of the liquid-state polymer material 24 is low so that the liquid-state polymer material 24 can permeate into the microporous structure of the carbon nanotube film structure 12. The remaining liquid-state polymer material 24 discharges via the outlet 502 of the material output device 50. The air initially in the microporous structure is expelled due to the flowing liquid-state polymer material 24, thereby avoiding or even preventing structural defects in the carbon nanotube composite 10 (see FIG. 2).

Here, in step (c1"), the carbon nanotube film structure 12 can be dipped directly into a pool of the liquid-state polymer material 24.

In step (c2"), the liquid-state polymer material 24 is solidified by the following substeps: (c2"1) heating the liquid-state polymer material 24 with the carbon nanotube film structure 12 to a predetermined temperature and maintaining the predetermined temperature for no more than 100 hours; and (c2"2) cooling the liquid-state polymer material 24 to room temperature, thereby obtaining the carbon nanotube-based composite material 10.

Step (c2"1) includes the following substeps: (c2"11) closing the first valve 301 of the material input device 30 and the second valve 501 of the material output device 50; and (c2"12) heating the die 400 by a heating device (not shown), and solidifying the liquid-state polymer material 24. The temperature of the liquid-state polymer material 24 is elevated gradually, in order to avoid implosion of the liquid-state polymer material 24. The predetermined temperature at which the liquid-state polymer material 24 solidifies is below 400°C. The heating device is selected from a group comprising of a heating plate, a thermocompressor, a baking oven, and a hotpress (i.e., hot-pressing apparatus).

Step (c2"2) includes the following substeps: (c2"21) heating the heating device to a temperature from about 50°C to about 70°C for a period of about 1-3 hours; (c2 "22) heating the heating device to a temperature from about 80°C to about 100°C for a period of about 1-3 hours; (c2"23) heating the heating device to a temperature from about 110°C to about 150°C for a period of about 2-20 hours, whereby the liquid-state polymer material 24 becomes solidified; and (c2"24) cooling the heating device to room temperature, taking the die 400 out from the heating device, and removing the combined carbon nanotube film structure 12 and liquid-state polymer material 24 from the die 400 to obtain the carbon nanotube-based composite material 10.

The carbon nanotube-based composite material 10 is formed by combining the carbon nanotube film structure 12 with the polymer material of the polymer matrix 14. As such, the carbon nanotubes can be uniformly dispersed in the polymer matrix 14 without the need for surface treatment of the carbon nanotubes. The carbon nanotube film structure 12 is substantially free of defects, and the carbon nanotube-based composite material 10 is a single, integrated body of material. Moreover, the alignment of the carbon nanotubes in the carbon nanotube-based composite material 10 is ordered. Thus, the electrical and thermal conductivity of the carbon nanotube-based composite material 10 can be improved. Additionally, the method for fabricating the carbon nanotube-based composite material 10 is simple and cost effective.

It is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that the above description and the claims drawn to a method may include some indication in reference to sequential performance of actions. However, any such indication used is only for exemplary purposes and is not to be construed as suggesting a single particular fixed order in which the actions must be performed.

## Claims

1. A carbon nanotube-based composite material (10) comprising:
a polymer matrix (14); and
a carbon nanotube film structure (12) disposed in the polymer matrix, the carbon nanotube film structure comprising a plurality of carbon nanotubes, wherein the carbon nanotube film structure is disposed in a central layer region between upper and lower layer portions of the polymer matrix, a plurality of interspaces is defined between the carbon nanotubes of the carbon nanotube film structure, and the polymer matrix fills the interspaces.

2. A carbon nanotube-based composite material as claimed in claim 1, wherein the polymer matrix is thermosetting resin selected from the group consisting of phenolic, epoxy, bismaleimide, polybenzoxazine, cyanate ester, polyimide, unsaturated polyamide ester and any combination thereof.

3. A carbon nanotube-based composite material as claimed in claim 1, wherein the polymer matrix is thermoplastic resin selected from the group consisting of polyethylene, polyvinyl chloride, polytetrafluoroethylene, polypropylene, polystyrene, polymethyl methacrylate acrylic, polyethylene terephthalate, polycarbonate, polyamide, polybutylene terephthalate, polyether ketone, polyether sulfone, ether sulfone, thermoplastic polyimide, polyetherimide, polyphenylene sulfide, polyvinyl acetate, paraphenylene benzobisoxazole and any combination thereof.

4. A carbon nanotube-based composite material as claimed in any of claims 1 to 3, wherein the plurality of carbon nanotubes in the carbon nanotube film structure contact each other by a Van Der Waals attractive force therebetween to form a self-supporting structure.

5. A carbon nanotube-based composite material as claimed in any of claims 1 to 4, wherein the carbon nanotube film structure comprises at least one carbon nanotube film, wherein the carbon nanotubes in the at least one carbon nanotube film are aligned along a same direction.

6. A carbon nanotube-based composite material as claimed in claim 5, wherein the carbon nanotube film structure comprises a plurality of carbon nanotube films and the plurality of carbon nanotube films are stacked each other.

7. A carbon nanotube-based composite material as claimed in either claim 5 or 6, wherein a thickness of each carbon nanotube film is from about 0.5 nm to about 100 µm.

8. A carbon nanotube-based composite material as claimed in any of claims 5 to 7, wherein the carbon nanotubes in the carbon nanotube film are joined end-to-end by Van Der Walls attractive force therebetween.

9. A carbon nanotube-based composite material as claimed in claim 1, wherein the carbon nanotube film structure is a carbon nanotube film structure formed so as to be self-supporting prior to inclusion in the composite material.

10. A method for fabricating a carbon nanotube-based composite material (10) comprising:
(a) forming a carbon nanotube film structure (12) and providing a polymer material of a polymer matrix (14); and
(b) filling the carbon nanotube film structure with the polymer material to form the carbon nanotube-based composite material comprising the carbon nanotube film structure and the polymer material;
wherein the carbon nanotube film structure is disposed in a central layer region between upper and lower layer portions of the polymer matrix, a plurality of interspaces is defined between the carbon nanotubes of the carbon nanotube film structure, and the polymer matrix fills the interspaces.

11. A method as claimed in claim 10, wherein step (a) further comprises the steps of:
(a1) providing a polymer film and at least one carbon nanotube film; and
(a2) adhering the at least one carbon nanotube film to the surface of the polymer film to form a preform.

12. A method as claimed in claim 11, wherein step (b) is performed by the method of:
heating the preform to combine the at least one carbon nanotube film with the polymer film to form the carbon nanotube-based composite material.

13. A method as claimed in claim 11, wherein step (b) comprises:
(b1) pre-combining at least one preform to obtain at least one treated preform; and
(b2) heating and pressing the at least one treated preform to achieve the carbon nanotube-based composite material.

14. A method as claimed in claim 10, wherein in step (b), the polymer material is a liquid-state polymer material.

15. A method as claimed in claim 14, wherein step (b) further comprises:
(b1') immersing the carbon nanotube film structure in the liquid-state polymer material; and
(b2') solidifying the liquid-state polymer material to achieve the carbon nanotube-based composite material.

16. A method as claimed in claim 10, wherein the carbon nanotube film structure is a self-supporting carbon nanotube film structure.

## Patentansprüche

1. Ein auf Kohlenstoffnanoröhren basierendes Verbundstoffmaterial (10), das Folgendes beinhaltet:
eine Polymermatrix (14); und
eine in der Polymermatrix angeordnete Kohlenstoffnanoröhrenfilmstruktur (12), wobei die Kohlenstoffnanoröhrenfilmstruktur eine Vielzahl von Kohlenstoffnanoröhren beinhaltet, wobei die Kohlenstoffnanoröhrenfilmstruktur in einem Mittelschichtbereich zwischen einem Ober- und einem Unterschichtabschnitt der Polymermatrix angeordnet ist, eine Vielzahl von Zwischenräumen zwischen den Kohlenstoffnanoröhren der Kohlenstoffnanoröhrenfilmstruktur definiert ist und die Polymermatrix die Zwischenräume füllt.

2. Auf Kohlenstoffnanoröhren basierendes Verbundstoffmaterial gemäß Anspruch 1, wobei die Polymermatrix wärmehärtbares Harz ist, das aus der Gruppe, bestehend aus Phenolharz, Epoxid, Bismaleimid, Polybenzoxazin, Cyanatester, Polyimid, ungesättigtem Polyamidester und einer beliebigen Kombination davon, ausgewählt ist.

3. Auf Kohlenstoffnanoröhren basierendes Verbundstoffmaterial gemäß Anspruch 1, wobei die Polymermatrix thermoplastisches Harz ist, das aus der Gruppe, bestehend aus Polyethylen, Polyvinylchlorid, Polytetrafluorethylen, Polypropylen, Polystyren, Polymethylmethacrylat-Acryl, Polyethylenterephthalat, Polycarbonat, Polyamid, Polybutylenterephthalat, Polyetherketon, Polyethersulfon, Ethersulfon, thermoplastischem Polyimid, Polyetherimid, Polyphenylensulfid, Polyvinylacetat, Paraphenylenbenzobisoxazol und einer beliebigen Kombination davon, ausgewählt ist.

4. Auf Kohlenstoffnanoröhren basierendes Verbundstoffmaterial gemäß einem der Ansprüche 1 bis 3, wobei die Vielzahl von Kohlenstoffnanoröhren in der Kohlenstoffnanoröhrenfilmstruktur durch Van-der-Waals-Anziehungskräfte dazwischen miteinander in Kontakt stehen, um eine selbsttragende Struktur zu bilden.

5. Auf Kohlenstoffnanoröhren basierendes Verbundstoffmaterial gemäß einem der Ansprüche 1 bis 4, wobei die Kohlenstoffnanoröhrenfilmstruktur mindestens einen Kohlenstoffnanoröhrenfilm beinhaltet, wobei die Kohlenstoffnanoröhren in dem mindestens einen Kohlenstoffnanoröhrenfilm entlang einer gleichen Richtung ausgerichtet sind.

6. Auf Kohlenstoffnanoröhren basierendes Verbundstoffmaterial gemäß Anspruch 5, wobei die Kohlenstoffnanoröhrenfilmstruktur eine Vielzahl von Kohlenstoffnanoröhrenfilmen beinhaltet und die Vielzahl von Kohlenstoffnanoröhrenfilmen aufeinander gestapelt sind.

7. Auf Kohlenstoffnanoröhren basierendes Verbundstoffmaterial gemäß Anspruch 5 oder 6, wobei eine Dicke jedes Kohlenstoffnanoröhrenfilms von etwa 0,5 nm bis etwa 100 µm beträgt.

8. Auf Kohlenstoffnanoröhren basierendes Verbundstoffmaterial gemäß einem der Ansprüche 5 bis 7, wobei die Kohlenstoffnanoröhren in dem Kohlenstoffnanoröhrenfilm durch Van-der-Waals-Anziehungskräfte dazwischen Ende an Ende aneinandergefügt sind.

9. Auf Kohlenstoffnanoröhren basierendes Verbundstoffmaterial gemäß Anspruch 1, wobei die Kohlenstoffnanoröhrenfilmstruktur eine Kohlenstoffnanoröhrenfilmstruktur ist, die gebildet ist, um vor der Einbindung in das Verbundstoffmaterial selbsttragend zu sein.

10. Ein Verfahren zum Fertigen eines auf Kohlenstoffnanoröhren basierenden Verbundstoffmaterials (10), das Folgendes beinhaltet:
(a) Bilden einer Kohlenstoffnanoröhrenfilmstruktur (12) und Bereitstellen eines Polymermaterials einer Polymermatrix (14); und
(b) Füllen der Kohlenstoffnanoröhrenfilmstruktur mit dem Polymermaterial, um das auf Kohlenstoffnanoröhren basierende Verbundstoffmaterial, das die Kohlenstoffnanoröhrenfilmstruktur und das Polymermaterial beinhaltet, zu bilden;
wobei die Kohlenstoffnanoröhrenfilmstruktur in einem Mittelschichtbereich zwischen einem Ober- und einem Unterschichtabschnitt der Polymermatrix angeordnet ist, eine Vielzahl von Zwischenräumen zwischen den Kohlenstoffnanoröhren der Kohlenstoffnanoröhrenfilmstruktur definiert ist und die Polymermatrix die Zwischenräume füllt.

11. Verfahren gemäß Anspruch 10, wobei Schritt (a) ferner die folgenden Schritte beinhaltet:
(a1) Bereitstellen eines Polymerfilms und mindestens eines Kohlenstoffnanoröhrenfilms; und
(a2) Anhaftenlassen des mindestens einen Kohlenstoffnanoröhrenfilms an der Oberfläche des Polymerfilms, um einen Vorformling zu bilden.

12. Verfahren gemäß Anspruch 11, wobei Schritt (b) durch folgendes Verfahren ausgeführt wird: Erwärmen des Vorformlings, um den mindestens einen Kohlenstoffnanoröhrenfilm mit dem Polymerfilm zu vereinigen, um das auf Kohlenstoffnanoröhren basierende Verbundstoffmaterial zu bilden.

13. Verfahren gemäß Anspruch 11, wobei Schritt (b) Folgendes beinhaltet:
(b1) Vor-Vereinigen mindestens eines Vorformlings, um mindestens einen behandelten Vorformling zu erhalten; und
(b2) Erwärmen und Pressen des mindestens einen behandelten Vorformlings, um das auf Kohlenstoffnanoröhren basierende Verbundstoffmaterial zu erreichen.

14. Verfahren gemäß Anspruch 10, wobei das Polymermaterial in Schritt (b) ein Polymermaterial im flüssigen Zustand ist.

15. Verfahren gemäß Anspruch 14, wobei Schritt (b) ferner Folgendes beinhaltet:
(b1') Eintauchen der Kohlenstoffnanoröhrenfilmstruktur in das Polymermaterial im flüssigen Zustand; und
(b2') Verfestigen des Polymermaterials im flüssigen Zustand, um das auf Kohlenstoffnanoröhren basierende Verbundstoffmaterial zu erreichen.

16. Verfahren gemäß Anspruch 10, wobei die Kohlenstoffnanoröhrenfilmstruktur eine selbsttragende Kohlenstoffnanoröhrenfilmstruktur ist.

## Revendications

1. Un matériau composite à base de nanotubes de carbone (10) comprenant :
une matrice polymère (14) ; et
une structure de films de nanotubes de carbone (12) disposée dans la matrice polymère, la structure de films de nanotubes de carbone comprenant une pluralité de nanotubes de carbone, la structure de films de nanotubes de carbone étant disposée dans une région de couche centrale entre des portions de couches supérieure et inférieure de la matrice polymère, une pluralité d'interstices étant définis entre les nanotubes de carbone de la structure de films de nanotubes de carbone, et la matrice polymère remplit les interstices.

2. Un matériau composite à base de nanotubes de carbone tel que revendiqué dans la revendication 1, dans lequel la matrice polymère est une résine thermodurcissable sélectionnée dans le groupe consistant en résines phénolique, epoxy, bismaléimide, polybenzoxazine, ester de cyanate, polyimide, ester de polyamide insaturé et n'importe laquelle de leur combinaison.

3. Un matériau composite à base de nanotubes de carbone tel que revendiqué dans la revendication 1, dans lequel la matrice polymère est une résine thermoplastique sélectionnée dans le groupe consistant en polyéthylène, chlorure de polyvinyle, polytétrafluoroéthylène, polypropylène, polystyrène, acrylique polyméthacrylate de méthyle, téréphtalate de polyéthylène, polycarbonate, polyamide, téréphtalate de polybutylène, polyéther cétone, polyéther sulfone, éther sulfone, polyimide thermoplastique, polyétherimide, sulfure de polyphénylène, acétate de polyvinyle, benzobisoxazole de paraphénylène et n'importe laquelle de leur combinaison.

4. Un matériau composite à base de nanotubes de carbone tel que revendiqué dans n'importe lesquelles des revendications 1 à 3, dans lequel la pluralité de nanotubes de carbone dans la structure de films de nanotubes de carbone sont en contact les uns avec les autres par une force d'attraction de Van der Waals entre eux pour former une structure autoportante.

5. Un matériau composite à base de nanotubes de carbone tel que revendiqué dans n'importe lesquelles des revendications 1 à 4, dans lequel la structure de films de nanotubes de carbone comprend au moins un film de nanotubes de carbone, les nanotubes de carbone dans cet au moins un film de nanotubes de carbone étant alignés suivant une même direction.

6. Un matériau composite à base de nanotubes de carbone tel que revendiqué dans la revendication 5, dans lequel la structure de films de nanotubes de carbone comprend une pluralité de films de nanotubes de carbone et la pluralité de films de nanotubes de carbone sont empilés les uns sur les autres.

7. Un matériau composite à base de nanotubes de carbone tel que revendiqué dans l'une ou l'autre revendication 5 ou 6, dans lequel une épaisseur de chaque film de nanotubes de carbone va d'environ 0,5 nm à environ 100 µm.

8. Un matériau composite à base de nanotubes de carbone tel que revendiqué dans n'importe lesquelles des revendications 5 à 7, dans lequel les nanotubes de carbone dans le film de nanotubes de carbone sont joints bout à bout par une force d'attraction de Van der Waals entre eux.

9. Un matériau composite à base de nanotubes de carbone tel que revendiqué dans la revendication 1, dans lequel la structure de films de nanotubes de carbone est une structure de films de nanotubes de carbone formée de façon à être autoportante avant d'être incluse dans le matériau composite.

10. Une méthode pour fabriquer un matériau composite à base de nanotubes de carbone (10) comprenant :
(a) former une structure de films de nanotubes de carbone (12) et fournir un matériau polymère d'une matrice polymère (14) ; et
(b) remplir la structure de films de nanotubes de carbone avec le matériau polymère pour former le matériau composite à base de nanotubes de carbone comprenant la structure de films de nanotubes de carbone et le matériau polymère ;
dans laquelle la structure de films de nanotubes de carbone est disposée dans une région de couche centrale entre des portions de couches supérieure et inférieure de la matrice polymère, une pluralité d'interstices sont définis entre les nanotubes de carbone de la structure de films de nanotubes de carbone, et la matrice polymère remplit les interstices.

11. Une méthode telle que revendiquée dans la revendication 10, dans laquelle l'étape
(a) comprend en outre les étapes consistant à :
(a1) fournir un film polymère et au moins un film de nanotubes de carbone ; et
(a2) faire adhérer cet au moins un film de nanotubes de carbone sur la surface du film polymère pour former une préforme.

12. Une méthode telle que revendiquée dans la revendication 11, dans laquelle l'étape (b) est réalisée par la méthode consistant à :
chauffer la préforme pour combiner cet au moins un film de nanotubes de carbone au film polymère pour former le matériau composite à base de nanotubes de carbone.

13. Une méthode telle que revendiquée dans la revendication 11, dans laquelle l'étape (b) comprend :
(b1) précombiner au moins une préforme pour obtenir au moins une préforme traitée ; et
(b2) chauffer et presser cette au moins une préforme traitée pour arriver au matériau composite à base de nanotubes de carbone.

14. Une méthode telle que revendiquée dans la revendication 10, dans laquelle à l'étape (b), le matériau polymère est un matériau polymère à l'état liquide.

15. Une méthode telle que revendiquée dans la revendication 14, dans laquelle l'étape (b) comprend en outre :
(b1') immerger la structure de films de nanotubes de carbone dans le matériau polymère à l'état liquide ; et
(b2') solidifier le matériau polymère à l'état liquide pour arriver au matériau composite à base de nanotubes de carbone.

16. Une méthode telle que revendiquée dans la revendication 10, dans laquelle la structure de films de nanotubes de carbone est une structure de films de nanotubes de carbone autoportante.
